Europäisches Patentamt

European Patent Office

Office européen des brevets

(11) Veröffentlichungsnummer: **0 303 825 B1**

(12) **EUROPÄISCHE PATENTSCHRIFT**

(45) Veröffentlichungstag der Patentschrift: **30.09.92**

(21) Anmeldenummer: **88111180.1**

(22) Anmeldetag: **13.07.88**

(51) Int. Cl.⁵: **G02F 1/015**

(54) **Lichtmodulator.**

(30) Priorität: **13.08.87 CH 3120/87**

(43) Veröffentlichungstag der Anmeldung:
**22.02.89 Patentblatt 89/08**

(45) Bekanntmachung des Hinweises auf die
Patenterteilung:
**30.09.92 Patentblatt 92/40**

(84) Benannte Vertragsstaaten:
**AT CH DE FR GB IT LI NL**

(56) Entgegenhaltungen:
**EP-A- 0 143 070**
**WO-A-86/07641**
**US-A- 4 080 617**

(73) Patentinhaber: **Landis & Gyr Betriebs AG**

**CH-6301 Zug(CH)**

(72) Erfinder: **Radivoje, Popovic**
**Fridbach 1**
**CH-6300 Zug(CH)**

(74) Vertreter: **Müller, Hans-Jürgen, Dipl.-Ing. et al**
**Müller, Schupfner & Gauger Maximilianstras-**
**se 6 Postfach 10 11 61**
**W-8000 München 1(DE)**

## Beschreibung

Die Erfindung bezieht sich auf einen Lichtmodulator der im Oberbegriff des Patentanspruchs 1 genannten Art sowie auf dessen Verwendung.

In der modernen Nachrichtentechnik werden Informationen mittels Glasfasern frei von äusseren Störeinflüssen von einem Sender zu einem Empfänger übertragen. Die elektronischen Signale werden zu diesem Zweck im Sender in Lichtsignale und am Bestimmungsort, z. B. mittels einer Photodiode, in elektronische Signale zur Weiterverarbeitung der Information umgewandelt. Die Erzeugung der zu übertragenden Lichtsignale erfolgt mittels einer intensitätsgesteuerten Lichtquelle oder mittels eines Lichtmodulators, der die Intensität einer z. B. mit konstanter Leistung sendenden Lichtquelle variiert.

Es sind auch schon Anwendungen bekannt, in denen ein Sensor und zugehörige Elektronik mittels eines Lichtleiters mit einer Zentrale in Verbindung stehen und die ihre Betriebsenergie aus dem von der Zentrale empfangenen Licht gewinnen. Die Messwerte des Sensors werden wieder mittels Lichtimpulsen an die Zentrale zurückgesendet. Für derartige Anwendungen sind mit der übrigen Schaltung voll integrierbare optische Elemente wünschbar.

Lichtmodulatoren arbeiten nach verschiedenen physikalischen Prinzipien (Handbuch für Hochfrequenz- und Elektro-Techniker, herausgegeben von C. Rint, Dr. A. Hüthig Verlag Heidelberg, Band 5, p. 675ff).

In "Integrated Optics" Springer-Verlag 1975, ISBN 3-540-07297-7 - herausgegeben von E. Tamir - sind verschiedene aus dem relativ teuren Material GaAs herstellbare Lichtmodulatoren beschrieben, die den grossen elektro-optischen Effekt des GaAs ausnützen und sich für eine Integration von Schaltkreisen mit optischen Elementen eignen.

Die Breite der verbotenen Zone im Bändermodell eines Halbleiters bestimmt eine obere Grenzfrequenz der elektromagnetischen Strahlung; oberhalb dieser Frequenz setzt eine starke Absorption im Halbleiter ein. Mittels eines elektrischen Feldes im Halbleiter kann die Breite der verbotenen Zone verändert und die Intensität einer Strahlung aus einem engen Frequenzband nahe der oberen Grenzfrequenz gesteuert werden.

Weiter ist bekannt, dass freie Ladungsträger im Halbleiter dessen Brechungsindices verändern. Die Konzentration der freien Ladungsträger ist durch die Dotierung vorbestimmt und ist, z. B. bei pn-Uebergängen, durch elektrische Potentiale steuerbar.

C. M. Horwitz et al. beschreiben in Solid-State Electronics Vol. 23, 1980, pp. 1191ff, wie die Absorption von Licht in einer p-i-n Diode aus Silizium im Gebiet des undotierten Halbleitermaterials mit der Dichte des Löcher-Elektronen-Plasmas veränderbar ist, das durch den Vorwärtsstrom in der Diode erzeugt wird. Für eine wesentliche Aenderung der Absorption sind allerdings Ströme von einigen zehn Ampere nötig.

Tamir beschreibt auf Seite 283 einen in der Ebene nicht begrenzten asymmetrischen Wellenleiter aus GaAS, dessen untere Grenzfrequenz ("cut-off") durch ein angelegtes Potential veränderbar ist. Diese Grenzfrequenz-Modulation beschränkt sich auf die Grundwelle ("monomode") des Wellenleiters und bedingt sehr enge Toleranzen in den Abmessungen des Wellenleiters.

R. S. Popovic beschreibt in "Optical Waveguides in Silicon IC-Technology" (Proceedings of the 14th Yugoslav Conference on Microelectronics, Beograd, May 14 - 16, 1986, pp. 183 - 189) einen vertikal und horizontal geführten, symmetrischen Wellenleiter für Licht mit grosser Akzeptanz, der mittels bekannter Verfahren der bipolaren und der CMOS-Technologie auf einem Substrat aus Silizium herstellbar ist.

Der Erfindung liegt die Aufgabe zugrunde, einen effizienten, vom elektro-optischen Effekt des Materials unabhängig und mit geringer Energie arbeitenden Lichtmodulator in einem Halbleitermaterial zu schaffen, der sich für die Integration mit anderen elektronischen Bauteilen u.U. auch auf ein und demselben Substrat eignet und für ein grosses Spektrum der elektromagnetischen Strahlung unterhalb der oberen Grenzfrequenz des Halbleiters anwendbar ist.

Die Aufgabe wird durch die kennzeichnenden Merkmale des Patentanspruchs 1 gelöst.

Nachstehend werden einige Ausführungsbeispiele der Erfindung anhand der Zeichnungen beschrieben.

Es zeigen:

Figur 1: einen Ausschnitt aus einer schematischen Aufsicht auf einen Lichtmodulator in einer Halbleiterstruktur,

Figur 2: einen schematischen Querschnitt durch einen Abschnitt A des Lichtmodulators,

Figur 3: einen schematischen Querschnitt durch einen aktiven Abschnitt B des Lichtmodulators,

Figur 4 : schematische Querschnitte durch Abschnitte A und einen Abschnitt B des Lichtmodulators und

Figur 5: eine prinzipielle Skizze einer Sensorbaugruppe.

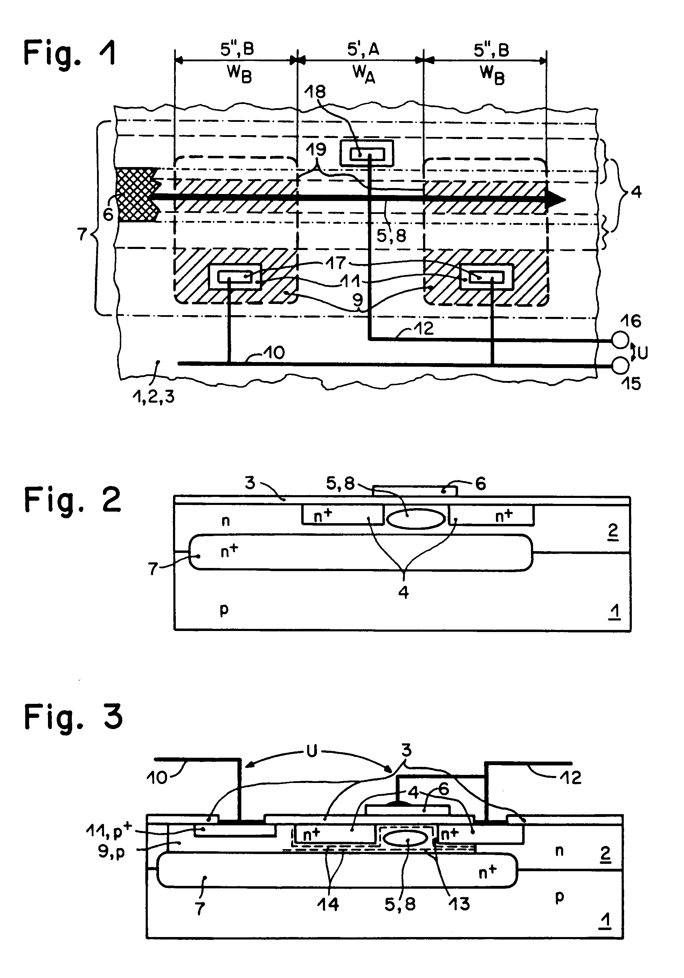

Die Figur 1 zeigt schematisch die Anordnung eines auf einem p-leitenden Substrat 1 aus einem halbleitenden Material erzeugten Lichtmodulators. Er besteht aus einer Reihe von abwechslungsweise aufeinanderfolgenden Abschnitten A und B. Die Abschnitte B weisen eine Länge $w_B$ auf, während eines von zwei Abschnitten B eingeschlossenen Abschnittes A die Länge $w_A$ besitzt.

Die Figur 2 zeigt den Aufbau eines Abschnittes A. Eine n-leitende, auf diesem Substrat 1 epitaxial aufgewachsene Schicht 2 ist von einer isolierenden Deckschicht 3 geschützt. Je ein streifenförmig dotierter Bereich 4 aus $n^+$-leitendem Halbeitermaterial begrenzen auf beiden Seiten in der Ebene der epitaxialen Schicht 2 ein Gebiet für den Wellenleiter 5, da der Brechungsindex in den dotierten Bereichen 4 kleiner ist als im Wellenleiter 5. Eine Gateelektrode 6, die auf der Deckschicht 3 angebracht ist, überdeckt den Wellenleiter 5 auf der ganzen Länge, besteht aus einer elektrisch gut leitenden Schicht und befindet sich beispielsweise auf dem elektrischen Potential der dotierten Bereiche 4. Der Wellenleiter 5 ist gegen das Substrat 1 hin mittels einer im Bereich der Grenzfläche zwischen dem Substrat 1 und der epitaxialen Schicht 2 versenkten, $n^+$-leitenden Schicht 7 begrenzt. Im Bereich der Gateelektrode 6 sammeln sich wie bei einem MOSFET negative Ladungsträger in einer dünnen Schicht des Halbleiters unmittelbar unter der Deckschicht 3 an und erniedrigen den Brechungsindex. Der Wellenleiter 5 ist daher in allen Richtungen der Zeichnungsebene durch Zonen mit einem kleineren Brechungsindex verglichen mit dem im Wellenleiter 5 vorhandenen Brechungsindex begrenzt, d. h. Lichtstrahlen 8 werden mittels Totalreflektion durch den Wellenleiter 5 senkrecht zur Zeichnungsebene der Figur 2 geleitet.

Die beiden $n^+$-leitenden dotierten Bereiche 4 und die $n^+$-leitende Schicht 7 sind untereinander elektrisch durch die n-leitende Schicht 2 ohmisch verbunden.

Im Abschnitt B (Figur 3) ist das Material der n-leitenden Schicht 2 über der versenkten Schicht 7 mittels Dotieren in ein p-leitendes Material von gleicher Leitfähigkeit umgeformt. Ein p-leitendes Gebiet 9 nimmt den Raum zwischen der Deckschicht 3 bzw. den dotierten Bereichen 4 und der versenkten Schicht 7 ein. Die Begrenzung des Gebietes 9 wird durch die Breite der versenkten Schicht 7 bestimmt, die ein direktes Angrenzen und einen ohmschen elektrischen Kontakt des p-leitenden Substrates 1 mit dem p-leitenden Gebiet 9 verhindert.

Durch ein Fenster in der Deckschicht 3 kontaktiert eine Zuleitung 10 mittels einer $p^+$-leitenden Insel 11 das Gebiet 9 ohmisch, während durch ein anderes Fenster in der Deckschicht 3 eine Verbindung 12 einen ohmschen Kontakt zu den dotierten Bereichen 4 und zur Schicht 7 herstellt. Die Gateelektrode 6 ist vorzugsweise an die Verbindung 12 angeschlossen.

Das p-leitende Gebiet 9 bildet mit den das Gebiet 9 umgebenden, n-leitenden Zonen räumlich verteilte, parallel geschaltete pn-Uebergänge mit Verarmungszonen 13 längs des Wellenleiters 5. Zwischen dem Gebiet 9 mittels der Zuleitung 10 und den $n^+$-leitenden Zonen mittels der Verbindung 12 lässt sich eine negative Vorspannung, eine Sperrspannung U, über den pn-Uebergängen aufrecht erhalten. Mittels der Sperrspannung U ist die Ausdehnung der Verarmungszonen 13 kontrollierbar.

Solange die Sperrspannung U praktisch null ist, sind die Verarmungszonen 13 dünn und praktisch auf Grenzflächen 14 zwischen dem p-leitenden Gebiet 9 und den n-leitenden Zonen beschränkt. Bei gleichen geometrischen Abmessungen der n-leitenden Zonen und gleicher Konzentration der Ladungsträger sind für einen Wellenleiter 5 mit einer Struktur gemäss der Figur 3 die Bedingungen der Ausbreitung von Lichtstrahlen 8 gleich wie für einen Wellenleiter 5 in einer Struktur gemäss der Figur 2.

Eine Erhöhung der Sperrspannung U (Figur 3) zwischen den Anschlüssen 10, 12 vergrössert die Ausdehnung der Verarmungszonen 13 wegen der unterschiedlichen Konzentrationen der Dotierung praktisch nur von den Grenzflächen 14 weg in den Wellenleiter 5 hinein. Der Brechungsindex ist in den Verarmungszonen 13 höher als im verbleibenden rein p-leitenden Gebiet 9 des Wellenleiters 5 und in den n-leitenden Zonen. Im Gebiet des Wellenleiters 5 erhöht sich daher ein mittlerer Brechungsindex mit anwachsender Sperrspannung U. Da die Verarmungszonen 13, d. h. die Zonen mit dem höchsten Brechungsindex, die äusseren Teile des Wellenleiters 5 bilden, sind die Bedingungen der Ausbreitung von Lichtstrahlen 8 im Wellenleiter 5 durch die Sperrspannung U wirksam veränderbar.

In einer Ausführung des Lichtmodulators (Figur 1) führt der Wellenleiter 5 Licht durch eine Reihe von abwechselnd hintereinander geschalteten Abschnitten A und B. Auf einen Abschnitt A, in dem ein Wellenleiterabschnitt 5' gemäss der Figur 2 aufgebaut ist, folgt ein Abschnitt B mit einem gemäss der Figur 3 aufgebauten Wellenleiterabschnitt 5". Danach folgen wieder Abschnitte A und B (Figur 1). Die Wellenleiterabschnitte 5' und 5" weisen eine gemeinsame Achse auf, die hier durch Lichtstrahlen 8 dargestellt ist, und bilden den Wellenleiter 5 des Lichtmodulators in der epitaxialen Schicht 2. Er ist in allen Abschnitten A, B gemeinsam eingegrenzt durch die Bereiche 4, durch die versenkte Schicht 7 und durch die Gateelektrode 6. Eine Pfeilrichtung der Lichtstrahlen 8 hat nur einen symbolischen Charakter, da die Lichtstrahlen 8 sich in beiden Richtungen im Wellenleiter 5 fortpflanzen können.

Vorteilhaft wird die Richtung der strahlen 8 an dem von der Einspeisestelle des Lichtmodulators entgegengesetzen Ende des Wellenleiters 5, beispielsweise mittels eines reflektierenden Abschlusses des Wellenleiterabschnitts 5', umgekehrt, um den Wellenleiter 5 im Lichtmodulator zweimal zu durchlaufen.

Der Wellenleiter 5 ist der Einfachheit halber zur Gerade gestreckt gezeichnet. Eine beliebige, aus räumlichen Gegebenheiten, z. B. Lage der optischen Anschlüsse etc., vorbestimmte Kurve des Wellenleiters 5 in der epitaxialen Schicht 2 ist denkbar, da der Lichtstrahl 8 seitlich durch die Bereiche 4 geführt ist.

In der Aufsicht ist die Gateelektrode 6 nur am linken Rand der Figur 1 gezeichnet und in der Fortsetzung nur mittels der seitlichen Begrenzungen gestrichelt angedeutet, während die Deckschicht 3 und die epitaxiale Schicht 2 nicht darstellbar sind.

Die p-leitenden Gebiete 9 sind über der versenkten Schicht 7 so angeordnet, dass sie nicht mit dem Substrat 1 einen elektrischen Kontakt bilden. Ein negativer Pol 15 einer hier nicht gezeigten Quelle der für eine Modulation notwendigen Sperrspannung U wird mittels der Zuleitungen 10 durch Kontaktfenster 17 in der Deckschicht 3 den $p^+$-leitenden Inseln 11 und den p-leitenden Gebieten 9 zugeführt. Ein positiver Pol 16 der Sperrspannung U ist mittels der Verbindung 12 durch ein Anschlussfenster 18 in der Deckschicht 3 zu einer der dotierten Bereiche 4 geführt.

Im allgemeinen weist eine Ausführung des Lichtmodulators n + 1 Abschnitte A und n Abschnitte B auf, die sich abwechslungsweise folgen. Das Modulationsvermögen des Lichtmodulators steigt linear zur Stufenzahl n.

Die Längen $w_A$, $w_B$ der Wellenleiterabschnitte 5', 5" in jedem Abschnitt B oder in jedem von zwei Abschnitten B eingeschlossenen Abschnitt A werden vorteilhaft gleich lang und im Bereich 50 $\mu$m bis 200 $\mu$m gewählt.

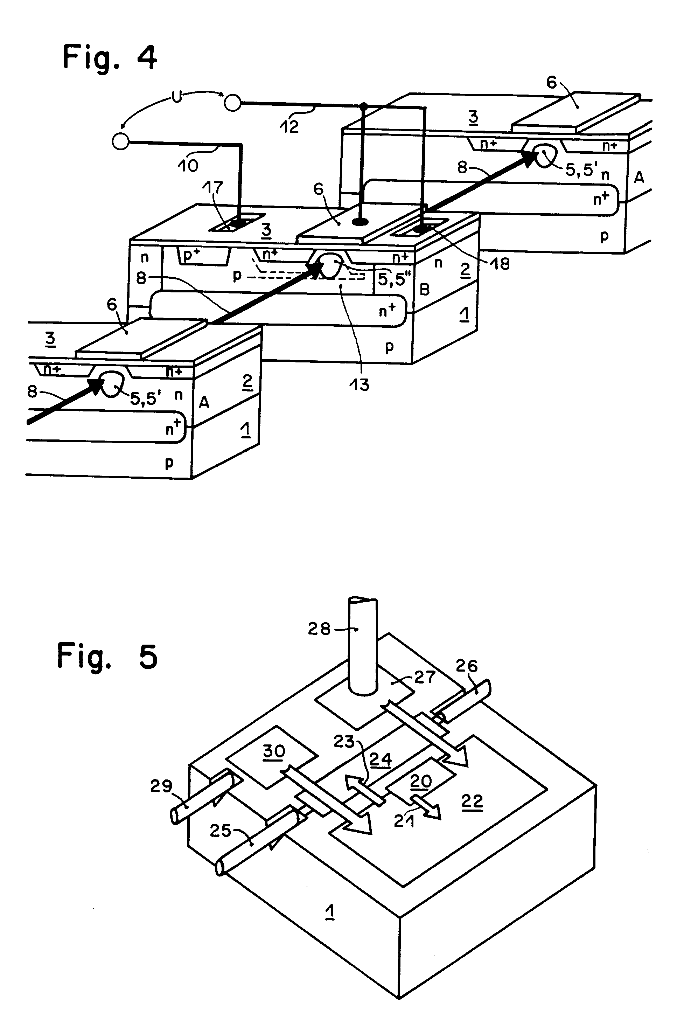

Minimal weist ein Lichtmodulator einen Lichtweg auf, der mindestens durch zwei Abschnitte A und einen Abschnitt B führt (Figur 4).

Solange die Sperrspannung U praktisch null ist, sind die mittleren Brechungsindices der Wellenleiterabschnitte 5', 5" in den Abschnitten A, B praktisch gleich. Bei einem Uebergang von einem Wellenleiterabschnitt 5' in ein Wellenleiterabschnitt 5" oder umgekehrt erfolgt keine Aenderung der Ausbreitungsbedingungen der Lichtstrahlen 8, d. h. eine maximale Durchlässigkeit des Wellenleiters 5 ist für die Lichtstrahlen 8 erreichbar.

Eine merklich von Null verschiedene Sperrspannung U zwischen der Zuleitung 10 und der Verbindung 12 erhöht den mittleren Brechungsindex in den Wellenleiterabschnitt 5" im Vergleich zum mittleren Brechungsindex in den Wellenleiterabschnitt 5'. Die Ausbreitungsbedingungen der Lichtstrahlen 8 in den beiden Typen von Wellenleiterabschnitten 5', 5" unterscheiden sich mit zunehmender Sperrspannung U. Reflexionsverluste in den Wellenleiterabschnitte 5" und an den Uebergängen zwischen den Abschnitten A, B schwächen die Intensität der Lichtstrahlen 8. Die Durchlässigkeit des Lichtmodulators für Lichtstrahlen 8 vermindert sich daher mit zunehmender Sperrspannung U.

Die Arbeitsweise des Lichtmodulators ist nur von der Ausdehnung der Verarmungszonen 13 bei den pn-Uebergängen, die in jedem bekannten Halbleitermaterial erzeugbar sind, und nicht von einem elektro-optischen Doppelbrechungseffekt abhängig, d. h. ein Lichtmodulator gemäss Patentanspruch 1 ist in jedem bekannten Halbleitermaterial, z. B. auch in kostengünstigem Silizium, erzeugbar.

Verarmungszonen 13 sind nicht nur bei pn-Uebergängen und bei MOS-Strukturen bekannt, sondern auch bei Schottky-Kontakten. Eine sinngemässe Anwendung dieser Kontakte zur Erzeugung anderer Ausführungen von Wellenleiter 5 und von Lichtmodulatoren ist denkbar.

Eine Ausführung des Lichtmodulators, der vorteilhaft auf einem für integrierte Schaltungen üblichen polierten Wafer aus p-leitendem Silizium in der (100)-Orientierung als Substrat 1 (Figur 1) aufgebaut ist, weist beispielsweise eine Stufenzahl 10 auf, d. h. er besteht aus 11 Abschnitten A und 10 Abschnitten B. Die Länge $w_A$, $w_B$ der Abschnitte A, B betragen je etwa 100 $\mu$m.

Der Lichtmodulator arbeitet vorteilhaft mit Sperrspannungen U zwischen 0 V und etwa -10 V und mit Strömen, die kleiner als 1 $\mu$A sind. Vorteilhaft werden Lichtstrahlen 8 mit einer Wellenlänge aus einem Bereich von 1,2 $\mu$m bis 2,0 $\mu$m gewählt.

Ein solches Substrat 1, das mit Bor dotiert ist, weist einen spezifischen Widerstand von 50 Ohm$^*$cm auf; dies entspricht einer Konzentration der Boratome von etwa $10^{15}$ cm$^{-3}$.

Die $n^+$-leitende versenkte Schicht 7 wird vorteilhaft durch eine Maske hindurch von der Vorderseite des Substrates 1 her mittels Eindiffundieren von Arsen an der für den Wellenleiter 5 vorbestimmten Stelle erzeugt. Die Arsenatome dringen bis in eine Tiefe von etwa 5 um ein. Die Konzentration des Arsens beträgt an der Oberfläche etwa 2 * $10^{19}$ cm$^{-3}$.

Die mit Phosphor dotierte, epitaxial aufgewachsene n-leitende Schicht 2 ist etwa 0,01 mm dick und weist eine Konzentration des Phosphors von etwa $10^{15}$ cm$^{-3}$ auf.

Anschliessend wird die Oberfläche oxidiert, bis die isolierende Deckschicht 3 etwa 1 $\mu$m dick ist.

An den für die Abschnitte B vorbestimmten Stellen werden Einlassfenster 19 für die Gebiete 9 geätzt. Die freigelegte epitaxiale Schicht 2 wird mit eindiffundiertem Bor bis auf die versenkte Schicht 7 hinab dotiert. Die Konzentration der Boratome bewegt sich im Bereich von $10^{16} cm^{-3}$, um eine vergleichbare Konzentration der Ladungsträger wie in der übrigen Schicht 2 zu erreichen. Anschliessend wird die als Maske dienende Deckschicht 3 auf der ganzen Oberfläche des Substrates weggeätzt.

Ein zweiter Oxidationsprozess erzeugt eine neue Deckschicht 3 mit einer Dicke von nur 100 nm.

Im Bereich des Wellenleiters 5 wird im folgenden Schritt ein beispielsweise 0,01 mm breiter Streifen aus polykristallinem Silizium als Gateelektrode 6 abgeschieden. Die Gateelektrode 6 dient in diesem Falle gleichzeitig auch als ein Teil einer Maske beim Aetzen zum Freilegen der Flächen für die Dotierung der streifen- bzw leistenartigen Bereiche 4. Eine Gateelektrode 6 aus einem aufgedampften Metall ist denkbar.

In bekannter Weise auf der Deckfläche 3 aufgebrachte Photoresist-Masken und die Gateelektrode 6 begrenzen bei zwei Ionenimplantationsschritten die für eine stärkere Dotierung vorbestimmten Gebiete (4; 6, 11). Die Bereiche 4 und die Gateelektrode 6 werden mit einer Dosis von ca. $10^{16} cm^{-2}$ Phosphoratomen in einem ersten Implantationsschritt dotiert. Nach Aendern der Photoresist-Maske werden in einem zweiten Schritt Boratome in einer Dosis von ca. $10^{15} cm^{-2}$ die Inseln 11 implantiert.

In einem abschliessenden Annealingprozess werden die dotierten Elemente, d.h. Bereiche 4, Schichten 7 und Inseln 11, definiert in ihre endgültige Form gebracht. Beispielsweise breiten sich die Bereiche 4 bei diesem Annealingprozess etwa 2,5 $\mu$m unter der Begrenzung der Gateelektrode 6 und etwa 3 $\mu$m in die Tiefe der Schicht 2 aus. Die versenkte Schicht 7 dehnt sich auch in die n- und p-leitende epitaxiale Schicht 2 aus. Sie verkleinert die epitaxiale Schicht 2 auf eine Dicke von etwa 5 $\mu$m. Ein für den Wellenleiter nutzbarer Querschnitt weist daher etwa die Abmessungen 5 $\mu$m x 5 $\mu$m auf.

In bekannter Weise werden noch Kontaktfenster 17, Anschlussfenster 18, die metallisierten Leitungen 10 und die Verbindungen 12 sowie eine nicht gezeigte Passivierungsschicht aufgebracht.

Das p-leitende Substrat 1 kann auch vorteilhaft durch eine p-leitende Grube ("p-well"), die sich im Bereich des Lichtmodulators auf einem n-leitenden Substrat erstreckt, ersetzt werden.

Die geschilderte Herstellung basiert auf den in der Technologie der integrierten Schaltungen mit Silizium bekannten Prozessschritten, ist aber in entsprechender Abwandlung mit allen andern technisch nutzbaren Halbleitermaterialien durchführbar. Insbesondere ist auch eine Herstellung eines komplementären Lichtmodulators möglich durch entsprechendes Vertauschen der n- und p-leitenden Teile durch Teile des komplementären Leitfähigkeitstyps.

Die Dotierungsangaben sind innerhalb von Grössenordnungen veränderbar, ebenso sind andere Dotierungselemente aus der Gruppe der III. bzw. V. Hauptgruppe verwendbar.

Ein gleichzeitiges Erzeugen des Lichtmodulators, der dazugehörigen Elektronik, Photodioden und Leuchtdioden (Laser) ist besonders vorteilhaft in Siliziumtechnik.

Eine denkbare Ausführung einer derartigen Sensorbaugruppe zeigt die Figur 5. Sie eignet sich insbesondere für das Erfassen von Messgrössen ausserhalb einer hier nicht gezeigten Zentrale. Beispielsweise trägt das Substrat 1 wenigstens einen Sensor 20. Er wandelt mechanische, thermische, elektromagnetische, optische, korpuskulare oder andere Messgrössen in elektrische Signale 21 um, die in einem CMOS-Schaltkreis 22 nach den üblichen Methoden, z. B. in einem integrierten Rechner oder in einem "Logic Array", verarbeitet werden und mittels der Sperrspannung U (Figur 1) über die Leitung 23 (Figur 5) einen mehrstufigen Lichtmodulator 24 direkt steuern. Licht wird mittels einer Beleuchtungsfaser 25 zum Lichtmodulator 24 geführt. Im Lichtmodulator 24 wird das Licht mit Information beaufschlagt und in einer Ausgangsfaser 26 weggeleitet. Besonders vorteilhaft wird auch die ganze, für den Betrieb notwendige Energie aus einer Solarzelle 27 gewonnen, die z. B. mittels einer Energiefaser 28 beleuchtet wird. Informationen an die Sensorbaugruppe werden mittels einer Informationsfaser 29 zu einem optischen Empfänger 30 geführt, der mit dem CMOS-Schaltkreis 22 in Verbindung steht.

Geeignete, an sich bekannte Mittel zum Ein- und Auskoppeln von Licht ermöglichen den Ersatz der Lichtleitfasern 25, 26, 28 und 29 durch eine einzige Faser. Sie trägt Licht aus den notwendigen Frequenzbereichen zur Sensorbaugruppe und führt die Informationen zur Zentrale zurück.

**Patentansprüche**

1. Lichtmodulator mit einem Substrat (1) aus Halbleitermaterial, welches Substrat (1) eine epitaxiale Schicht (2) mit einem optischen Wellenleiter (5) zum Führen von Lichtstrahlen (8) entlang einer vorgegebenen Richtung aufweist, dadurch gekennzeichnet, dass der Wellenleiter (5) im Bereich zwischen einer im Bereich der Grenzfläche zwischen dem Substrat (1) und der epitaxialen Schicht (2) vergrabenen Schicht (7), zwei sich im Abstand voneinander in der epitaxialen Schicht (2) erstreckenden, streifenförmigen dotierten Bereichen (4) und einer isolierten Gateelektrode (6) über der von den dotierten Bereichen (4) der epitaxialen Schicht (2) eingegrenzten Zone gebildet ist, wobei die vergrabene Schicht (7), die dotierten Bereiche (4) und eine dünne Schicht des Halbleiters unterhalb der Gateelektrode (6) eine von der Leitfähigkeit der epitaxialen Schicht (2) abweichende Leitfähigkeit und damit einen kleineren Brechungsindex als die epitaxiale Schicht (2) haben, dass der Wellenleiter (5) abwechslungsweise aufeinanderfolgende Wellenleiterabschnitte (5', 5") zweier verschiedener Arten aufweist, wobei nur die Abschnitte (5") der ersten Art in der epitaxialen Schicht (2) gebildete Verarmungszonen (13) aufweisen, und dass in den Abschnitten (5") der ersten Art Zuleitungen (10, 12) zu diesen Verarmungszonen (13) und den dotierten Bereichen (4) vorhanden sind, an welche eine elektrische Sperrspannung (U) angelegt werden kann, wodurch die Ausdehnung der Verarmungszonen (13) kontrollierbar ist, so dass Bedingungen für eine Ausbreitung der Lichtstrahlen (8) in den Abschnitten (5") der ersten Art gegenüber den Bedingungen für eine Ausbreitung in den Abschnitten (5') der zweiten Art mittels dieser Sperrspannung veränderbar sind.

2. Lichtmodulator nach Anspruch 1, dadurch gekennzeichnet, dass im Bereich des Wellenleiterabschnitts (5") der ersten Art das Material der epitaxialen Schicht (2) über der vergrabenen Schicht (7) als Gebiet (9) mit einer Leitfähigkeit vom gleichen Leitungstyp wie das Substrat (1) ausgebildet ist und dass ausserhalb des Gebiets (9) und im Bereich der angrenzenden Wellenleiterabschnitte (5') der zweiten Art der Typ der Leitfähigkeit in der epitaxialen Schicht (2) zum Leitungstyp des Substrates (1) komplementär ist, so dass das Gebiet (9) vom Substrat (1), von der epitaxialen Schicht (2) der angrenzenden Wellenleiterabschnitte (5') der zweiten Art, von den dotierten Bereichen (4) sowie von der vergrabenen Schicht (7) durch pn-Uebergänge getrennt ist.

3. Lichtmodulator nach Anspruch 2, dadurch gekennzeichnet, dass die epitaxiale Schicht (2) in den Gebieten (9) eine Leitfähigkeit vom p-Typ und ausserhalb der Gebiete (9) eine solche vom n-Typ aufweist, dass die dotierten Bereiche (4) und die vergrabene Schicht (7) $n^+$-leitend sind und dass das Substrat (1) p-leitend ist.

4. Lichtmodulator nach einem der vorhergehenden Ansprüche, dadurch gekennzeichnet, dass der Wellenleiter (5) in Richtung der Lichtstrahlen (8) in n+1 Wellenleiterabschnitte (5') der zweiten Art und n Wellenleiterabschnitte (5") der ersten Art eingeteilt ist, dass zwischen zwei Abschnitten (5') der zweiten Art ein Abschnitt (5") der ersten Art so angeordnet ist, dass die Abschnitte (5') der zweiten Art die Abschnitte (5") der ersten Art in Richtung der Lichtstrahlen (8) begrenzen, und dass n eine ganze Zahl grösser Null ist.

5. Lichtmodulator nach einem der vorhergehenden Ansprüche, dadurch gekennzeichnet, dass die Wellenleiterabschnitte (5') der ersten Art gleiche Längen ($w_A$) und die Wellenleiterabschnitte (5") der zweiten Art gleiche Längen ($w_B$) besitzen und dass die Länge ($w_A$ bzw. $w_B$) einen Wert im Bereich von 50 $\mu$m bis 200 $\mu$m aufweist.

6. Lichtmodulator nach einem der vorhergehenden Ansprüche, dadurch gekennzeichnet, dass das Substrat (1) aus Silizium ist.

7. Lichtmodulator nach Anspruch 6, dadurch gekennzeichnet, dass die Lichtstrahlen (8) eine Wellenlänge im Bereich 1,2 bis 2,0 $\mu$m aufweisen.

8. Sensorbaugruppe bestehend aus einem Substrat (1) mit einem Sensor (20), einem CMOS-Schaltkreis (22), einer Solarzelle (27), einem optischem Empfänger (30) und einem Lichtmodulator nach einem der vorhergehenden Ansprüche, wobei die Bauelemente (20; 22; 27; 30) auf dem Substrat (1) ausserhalb des Wellenleiters (5) mit einander funktionell verbunden sind und zum Erzeugen einer Sperrspannung (U) angeordnet sind und wobei der Sensor zum Umwandeln einer physikalischen Messgrösse in ein im CMOS-Schaltkreis (22) zur Sperrspannung (U) verarbeitetes elektrisches Signal (21), die Solarzelle zum Erzeugen der für die Sensorbaugruppe notwendigen elektrischen Energie und der optische Empfänger (30) zum Empfang von Informationen an die Sensorbaugruppe eingerichtet ist.

9. Verwendung der Sensorbaugruppe mit einem Lichtmodulator nach Anspruch 8 zur Informationsübertragung zu bzw. von einer Zentrale, dadurch gekennzeichnet, dass das Substrat (1) mittels Lichtleitfasern (25; 26; 28; 29) mit der Zentrale verbunden ist, wobei die Lichtstrahlen (8) von der Zentrale über die Beleuchtungsfaser (25) durch den Wellenleiter (5; 5', 5") hindurch und mit den Signalen (21) entsprechenden Informationen beaufschlagt über die Ausgangsfaser (26) wieder zur Zentrale zurückgeleitet sowie von der Zentrale sowohl Licht durch die Beleuchtungsfaser (28) zur Solarzelle (27) als auch Informationen durch die
Informationsfaser (29) zum optischen Empfänger (30) geführt werden.

10. Verwendung der Sensorbaugruppe nach Anspruch 9, dadurch gekennzeichnet, dass die
Sensorbaugruppe mittels einer einzigen Faser
mit der Zentrale verbunden ist, welche die
Funktionen der vier Lichtleitfasern (25; 26; 28;
29) übernimmt.

**Claims**

1. A light modulator comprising a substrate (1) of
semiconductor material, which substrate (1)
has an epitaxial layer (2) with an optical
waveguide (5) for guiding light beams (8) in a
predetermined direction, characterised in that
the waveguide (5) is formed in the region between a layer (7) which is buried in the region
of the interface between the substrate (1) and
the epitaxial layer (2), two strip-shaped doped
regions (4) extending at a spacing from each
other in the epitaxial layer (2), and an insulated
gate electrode (6) over the zone enclosed by
the doped regions (4) of the epitaxial layer (2),
wherein the buried layer (7), the doped regions
(4) and a thin layer of the semiconductor beneath the gate electrode (6) are of a conductivity which differs from the conductivity of the
epitaxial layer (2) and thus have a lower refractive index than the epitaxial layer (2), that the
waveguide (5) has waveguide portions (5', 5")
of two different kinds, which occur in alternate
succession, wherein only the portions (5") of
the first kind have depletion zones (13) formed
in the epitaxial layer (2), and that provided in
the portions (5") of the first kind are feed lines
(10, 12) to said depletion zones (13) and the
doped regions (4), to which an electrical blocking voltage (U) can be applied, whereby the
extent of the depletion zones (13) can be controlled so that conditions for a propagation of
the light beams (8) in the portions (5") of the
first kind can be altered by means of said
blocking voltage relative to the conditions for a
propagation in the portions (5') of the second
kind.

2. A light modulator according to claim 1 characterised in that in the region of the waveguide
portion (5") of the first kind the material of the
epitaxial layer (2) over the buried layer (7) is in
the form of an area (9) with a conductivity of
the same conduction type as the substrate (1)
and that outside the area (9) and in the region
of the adjoining waveguide portions (5') of the second kind the type of conductivity in the
epitaxial layer (2) is complementary to the conduction type of the substrate (1) so that the
area (9) is separated by pn-junctions fro the
substrate (1), from the epitaxial layer (2) of the
adjoining waveguide portions (5') of the second
kind, from the doped regions (4) and fro the
buried layer (7).

3. A light modulator according to claim 2 characterised in that the epitaxial layer (2) is of a
conductivity of the p-type in the areas (9) and
outside the areas (9) it is of such a conductivity of the n-type that the doped regions (4) and
the buried layer (7) are $n^+$-conducting and that
the substrate (1) is p-conducting.

4. A light modulator according to one of the preceding claims characterised in that the
waveguide (5) is divided in the direction of the
light beams (8) into n + 1 waveguide portions
(5') of the second kind and n waveguide portions (5") of the first kind, that a portion (5") of
the first kind is so arranged between two portions (5') of the second kind that the portions
(5') of the second kind delimit the portions
(5") of the first kind in the direction of the light
beams (8) and that n is an integer of greater
than zero.

5. A light modulator according to one of the preceding claims characterised in that the
waveguide portions (5') of the first kind are of
the same lengths ($w_A$) and the waveguide portions (5") of the second kind are of the same
lengths ($w_B$) and that the length ($w_A$ or $w_B$) is of
a value in the range of from 50 $\mu$m to 200 $\mu$m.

6. A light modulator according to one of the preceding claims characterised in that the substrate (1) is of silicon.

7. A light modulator according to claim 6 characterised in that the light beams (8) are of a
wavelength in the range of from 1.2 to 2.0 $\mu$m.

8. A sensor structural group comprising a substrate (1) having a sensor (20), a CMOS-circuit
(22), a solar cell (27), an optical receiver (30)
and a light modulator according to one of the
preceding claims, wherein the components (20;
22; 27; 30) are functionally connected together
on the substrate (1) outside the waveguide (5)
and are arranged to generate a blocking voltage (U) and wherein the sensor is adapted to
convert a physical measurement parameter
into an electrical signal (21) which is processed in the CMOS-circuit (22) to give the blocking voltage (U), the solar cell is adapted to generate the electrical energy necessary for the sensor structural group, and the optical receiver (30) is adapted to receive information to the sensor structural group.

9. Use of the sensor structural group with a light modulator according to claim 8 for information transmission to or from a central station, characterised in that the substrate (1) is connected to the central station by means of optical fibres (25; 26; 28; 29), wherein the light beams (8) from the central station by way of the lighting fibre (25) through the waveguide (5; 5', 5") and acted upon with information corresponding to the signals (21) are passed back again by way of the output fibre (26) to the central station and from the central station light is passed through the lighting fibre (28) to the solar cell (27) and information is passed through the information fibre (29) to the optical receiver (30).

10. Use of the sensor structural group according to claim 9 characterised in that the sensor structural group is connected by means of a single fibre to the central station, which performs the functions of the four optical fibres (25; 26; 28; 29).

**Revendications**

1. Modulateur de lumière comportant un substrat (1) en matière semi-conductrice, substrat qui présente une couche épitaxiale comportant un guide d'ondes optique (5) pour guider des rayons lumineux (8) le long d'une direction prédéterminée, caractérisé en ce que le guide d'ondes (5) est formé, dans la région comprise entre une couche (7) enterrée dans la région de la surface limite entre le substrat (1) et la couche épitaxiale (2), de deux régions dopées (4), en forme de bandes, s'étendant à distance l'une de l'autre dans la couche épitaxiale (2) et d'une électrode de grille isolée (6) au-dessus de la zone limitée par les régions dopées (4) de la couche épitaxiale (2), la conductibilité de la couche enterrée (7), des régions dopées (4) et d'une mince couche du semi-conducteur au-dessus de l'électrode de grille (6) étant différentes de la conductibilité de la couche épitaxiale (2) et leur indice de réfraction étant donc inférieur à celui de la couche épitaxiale (2), en ce que le guide d'ondes présente en alternance des parties successives (5', 5") de guide d'ondes de deux types différents, seules les parties (5") du premier type présentant des zones d'appauvrissement (13) formées dans la couche épitaxiale (2), et en ce qu'il est prévu, dans les parties (5") du premier type, des conducteurs (10, 12) à ces zones d'appauvrissement (13) et aux régions dopées (4), auxquelles peut être appliquée une tension électrique de blocage (U), grâce à quoi l'extension des zones d'appauvrissement (13) est contrôlable, d'une manière telle que l'on peut modifier, au moyen de cette tension de blocage, des conditions d'une propagation des rayons lumineux (8) dans les parties (5") du premier type par rapport aux conditions d'une propagation dans les parties (5') du deuxième type.

2. Modulateur de lumière selon la revendication 1, caractérisé en ce que la matière de la couche épitaxiale (2) au-dessus de la couche enterrée (7) est réalisée, dans la région de la partie (5") de guide d'ondes du premier type, en tant que domaine (9) d'une conductibilité du même type de conductibilité que le substrat (1) et en ce que le type de la conductibilité dans la couche épitaxiale (2), en dehors du domaine (9) et dans la région des parties (5') de guide d'ondes adjacentes du deuxième type, est complémentaire du type de conductibilité du substrat (1), de sorte que le domaine (9) est séparé, par des jonctions pn, du substrat (1) de la couche épitaxiale (2), des parties (5') adjacentes de guide d'ondes du deuxième type, des régions dopées (4) ainsi que de la couche enterrée (7).

3. Modulateur de lumière selon la revendication 2, caractérisé en ce que la couche épitaxiale (2) présente, dans les domaines (9), une conductibilité du type p et, en dehors des domaines (9), une conductibilité de type n telle que les régions dopées (4) et la couche enterrée (7) sont conductrices $n^+$ et en ce que le substrat (1) est conducteur p.

4. Modulateur de lumière selon l'une des revendications précédentes, caractérisé en ce que le guide d'ondes (5) est divisé, dans la direction des rayons lumineux (8), en n+1 parties (5') de guide d'ondes du deuxième type et n parties (5") de guide d'ondes du premier type, en ce qu'une partie (5") du premier type est disposée entre deux parties (5') du deuxième type de telle manière que les parties (5') du deuxième type limitent les parties (5") du premier type dans la direction des rayons lumineux (8) et en ce que n est un nombre entier supérieur à zéro.

5. Modulateur de lumière selon l'une des revendications précédentes, caractérisé en ce que les longueurs ($w_A$) des parties (5') de guide d'ondes du premier type sont égales entre elles et en ce que les longueurs ($w_B$) des parties (5") de guide d'ondes du deuxième type sont égales entre elles et en ce que la valeur de la longueur ($w_A$ ou $w_B$) est comprise dans la plage de 50 $\mu$m à 200 $\mu$m.

6. Modulateur de lumière selon l'une des revendications précédentes caractérisé en ce que le substrat (1) est en silicium.

7. Modulateur de lumière selon la revendication 6, caractérisé en ce que la longueur d'onde des rayons lumineux est dans la plage comprise de 1,2 à 2,0 $\mu$m.

8. Sous-ensemble capteur constitué d'un substrat (1) comportant un capteur (20), un circuit CMOS (22), une cellule solaire (27), un récepteur optique (30) et un modulateur de lumière conforme à l'une des revendications précédentes, les éléments (20; 22; 27; 30) étant reliés de façon fonctionnelle entre eux sur le substrat (1) en dehors du guide d'ondes (5) et étant disposés pour créer une tension de blocage (U), et le capteur étant agencé pour transformer une grandeur de mesure physique en un signal électrique (21) traité dans un circuit CMOS (22) pour former la tension de blocage (U), la cellule solaire étant agencée pour engendrer l'énergie électrique nécessaire pour le sous-ensemble capteur et le récepteur optique (30) étant agencé pour recevoir des informations au sous-ensemble capteur.

9. Utilisation du sous-ensemble capteur avec un modulateur de lumière selon la revendication 8 pour transférer des informations vers une unité centrale et depuis celle-ci, caractérisé en ce que le substrat (1) est lié à l'unité centrale au moyen de fibres optiques (25; 26; 28; 29), les rayons lumineux (8) étant amenés depuis l'unité centrale par la fibre d'éclairage (25) à travers le guide d'ondes (5; 5', 5") et des informations correspondant aux signaux (21) leur étant appliquées, les rayons lumineux étant renvoyés à l'unité centrale par la fibre de sortie (26) et de la lumière étant d'autre part amenée par la fibres d'éclairage (28) à la cellule solaire (27) et des informations étant amenées au récepteur optique par la fibre d'information (29).

10. Utilisation du sous-ensemble capteur selon la revendication 9, caractérisée en ce que le sous-ensemble capteur est relié à l'unité centrale à l'aide d'une fibre unique qui exerce les fonctions des quatre fibres optiques (25; 26; 28; 29).

# Fig. 1

# Fig. 2

# Fig. 3

# Fig. 4

# Fig. 5